# EUROPEAN PATENT SPECIFICATION

(11) **EP 3 977 687 B1**
(45) Date of publication and mention of the grant of the patent: **24.09.2025**
(21) Application number: 19931060.8
(22) Date of filing: 30.05.2019
(51) Int. Cl.: H04L 9/40, H04L 43/10, H04L 43/0811

(54) **BI-DIRECTIONAL FORWARDING DETECTION AUTHENTICATION**
AUTHENTIFIZIERUNG VON BIDIRECTIONAL FORWARDING DETECTION
AUTHENTIFICATION D'UNE DÉTECTION DE RETRANSMISSION BIDIRECTIONNELLE

(43) Date of publication of application: 06.04.2022
(73) Proprietor: ZTE Corporation, Shenzhen, Guangdong 518057 (CN)
(72) Inventor: MIRSKY, Gregory, Pleasanton, California 94566 (US); XIAO, Min, Nanjing, Jiangsu 210012 (CN)
(74) Representative: Vossius & Partner Patentanwälte Rechtsanwälte mbB
(86) International application number: PCT/CN2019/089303
(87) International publication number: WO 2020/237577

(56) References cited:
- CN-A- 102 932 318
- CN-A- 103 166 915
- CN-A- 103 297 400
- CN-A- 105 847 056
- CN-A- 107 547 383
- JP-A- 2013 005 028
- US-A1- 2014 157 367
- KATZ D WARD JUNIPER NETWORKS D: "Bidirectional Forwarding Detection (BFD); rfc5880.txt", BIDIRECTIONAL FORWARDING DETECTION (BFD); RFC5880.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 June 2010 (2010-06-01), pages 1 - 49, XP015070820
- JETHANANDANI VMWARE A MISHRA SES NETWORKS A SAXENA CIENA CORPORATION M BHATIA NOKIA M: "Optimizing BFD Authentication; draft-ietf-bfd-optimizing-authentication-06.txt", OPTIMIZING BFD AUTHENTICATION; DRAFT-IETF-BFD-OPTIMIZING-AUTHENTICATION-06.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLA, no. 6, 12 October 2018 (2018-10-12), pages 1 - 7, XP015128957

## Description

### TECHNICAL FIELD

This disclosure is directed generally to authentication in packet data communications networks.

### BACKGROUND

Bidirectional Forwarding Detection (BFD) technology can be used to monitor paths between networking systems. Using BFD technology, a device can detect a defect or a loss of the path continuity and may trigger changes in the network to preserve the critical services. An example of a trigger change may be a protection switchover. Using BFD without any security measures, for example, by exchanging BFD control messages without authentication, increases the risk of an attack especially over multiple nodes. Thus, using BFD without security measures may cause false positive as well as false negative defect detection situations. In the former, an attacker may spoof BFD control messages pretending to be a remote peer and can thus view the BFD session operation even though the real path had failed. In the latter, the attacker may spoof altered BFD control message indicating that the BFD session is un-operational even though the path and the remote BFD peer operate normally.

KATZ D WARD JUNIPER NETWORKS D, "Bidirectional Forwarding Detection (BFD); rfc5880.txt", INTERNET ENGINEERING TASK FORCE, IETF; and ETHANANDANI VMWARE A MISHRA SES NETWORKS A SAXENA CIENA CORPORATION M BHATIA NOKIA M, "Optimizing BFD Authentication; draft-ietf-bfd-optimizing-authentication-06.txt"; INTERNET-DRAFT: NETWORK WORKING GROUP, INTERNET ENGINEERING TASK FORCE, IETF; are documents concerning related prior art.

CN103297400A relates to a security alliance management method based on a bidirectional forwarding detection protocol.

US 2014/0157367 A1 relates to verification method and node for a BFD session.

### SUMMARY

Techniques are disclosed for using an extended Bi-directional Forwarding Detection (BFD) control packet to perform lightweight authentication in a network. The exemplary lightweight authentication techniques can be used to perform an opportunistic authentication or an authentication-at-will so that a network device can determine when an authentication is performed. The invention is specified by the independent claims. Preferred embodiments are defined in the dependent claims. In the following description, although numerous features may be designated as optional, it is nevertheless acknowledged that all features comprised in the independent claims are not to be read as optional.

In a first exemplary embodiment, a packet communication method includes generating, by a first device, a first packet for transmission to a second device causing the second device to initiate a process of performing authentication based on information provided in the first packet, and sending the first packet to the second device. The first packet includes: a first control message including a first bi-directional forwarding detection (BFD) session information, where the first control message includes a poll flag value that indicates that the first device is
expecting to receive a packet from the second device, a first identifier associated with the first device, and a first payload that includes a type of authentication to be performed by the second device, a mode of authentication that indicates that the second device is to perform either a periodic authentication or a one-time authentication, and a length of an authentication data to be used by the second device during authentication.

In a second exemplary embodiment, a packet communication method includes receiving, by a second device, a first packet from a first device to initiate a process of performing authentication based on information provided in the first packet. The first packet includes: a first control message including a first bi-directional forwarding detection (BFD) session information, where the first control message includes a poll flag value that indicates that the first device is expecting to receive a packet from the second device, a first identifier associated with the first device, and a first payload that includes a type of authentication to be performed by the second device, a mode of authentication that indicates that the second device is to perform either a periodic authentication or a one-time authentication, and a length of an authentication data to be used by the second device during authentication. The method of the second exemplary embodiment also includes determining, by the second device, that the second device is configured to perform the type of authentication, and sending, by the second device and after the determining, a second packet to the first device. The second packet includes: a second control message including a second BFD session information, where the second control message includes a final flag value that indicates that the second packet is sent in response to the first packet, a second identifier associated with the second device, and a second payload that includes the type of authentication that indicates to the first device that the second device is configured to perform authentication using the type of authentication indicated by the first payload, the mode of authentication, and the length of the authentication data.

In yet another exemplary aspect, the above-described methods and/or the methods described in this patent document are embodied in the form of processor-executable code and stored in a computer-readable program medium. The computer readable program is stored on a non-transitory computer readable media, the computer readable program including code that when executed by a processor, causes the processor to implement the methods described in this patent document.

In yet another exemplary embodiment, a device is disclosed that is configured or operable to perform the above-described methods and/or the methods described in this patent document.

The above and other aspects and their implementations are described in greater detail in the drawings, the descriptions, and the claims.

### BRIEF DESCRIPTION OF THE DRAWING

FIG. 1A shows a format for some fields of a Bi-directional Forwarding Detection (BFD) control packet.
FIG. 1B shows an optional authentication section for the BFD control packet.
FIG. 2 shows an exemplary format for an extended BFD control packet to which a lightweight authentication capability can be added.
FIG. 3 shows Capability Type-Length-Value (TLV) fields that can be added to the extended BFD control packet to indicate to a network device the information related to a requested lightweight authentication.
FIG. 4 shows Lightweight Authentication TLV fields that can be added to the extended BFD control packet to indicate information related to a lightweight authentication type to be performed by a network device.
FIG. 5 shows the exemplary lightweight authentication process that includes a negotiation phase and an authentication phase.
FIG. 6 shows an exemplary flowchart for a sender device receiving and processing extended BFD control packet(s) with the Lightweight Authentication TLV.
FIG. 7 shows an exemplary flowchart for a responder device receiving and processing extended BFD control packet(s) with the Lightweight Authentication TLV.
FIG. 8 shows an exemplary block diagram of a hardware platform that may be a part of a network device.
FIG. 9 shows an example of a system for generating or using the extended BFD control packet.

### DETAILED DESCRIPTION

The example headings for the various sections below are used to facilitate the understanding of the disclosed subject matter and do not limit the scope of the claimed subject matter in any way. Accordingly, one or more features of one example section can be combined with one or more features of another example section. Section 1 first provides a general description of the current state of Bi-directional Forwarding Detection (BFD). Section II describes exemplary lightweight BFD authentication techniques that can overcome at least some of the technical issues identified in Section I.

### I. Current State of BFD Technology

BFD technology can be used to monitor paths between networking systems. BFD technology includes authentication protection of BFD control packets to minimize chances of attacks in a networking system. However, at least some of the supported authentication protocols do not provide sufficient protection in modern networks. Also, current BFD technology requires authentication of each and every BFD control packet. Such an authentication requirement can put a computational burden on networking devices, especially in the asynchronous mode, at least because authenticating each BFD control packet can require substantial computing resources to support packet exchange at high rates. Furthermore, authentication of BFD control packets can have at least the following technical issues: (1) the available authentication modes may not provide sufficient security; and (2) the introduction of the new, more secure modes of authentication may be difficult to implement.

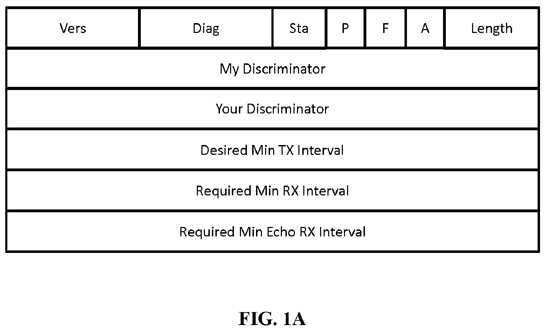

FIG. 1A shows a format for some fields of a BFD control packet. The BFD control packet can include information for establishing a BFD session between two devices. The Vers field indicates the version number of the protocol. The Diag field refers to a diagnostic code specifying the local system's or device's reason for the last change in session state. The State field (Sta) indicates a current BFD session state as seen by the transmitting device. For example, a value of 1 in the Sta field corresponds to a Down state and a value of 3 corresponds to an Up state. The Poll field (P) can be set to a pre-determined value (e.g., 1) by a transmitting device to indicate that the transmitting device is requesting verification of connectivity, or of a parameter change, and is expecting a packet with the Final field (F) bit in a reply packet. If the Poll field (P) is clear, then the transmitting system is not requesting verification. In this patent document, the term "poll flag value" describes the content of the Poll field (P). Thus, the terms Poll field (P) and poll flag may be used interchangeably.

The Final field (F) if set by a transmitting device, indicates that the transmitting device is responding to a received BFD control packet that had the Poll field (P) bit set. If the Final field (F) is clear, then the transmitting device is not responding to a Poll. In this patent document, the term "final flag value" describes the content of the Final field (F). Thus, the terms Final field (F) and final flag may be used interchangeably. The Authentication Present field (A) indicates whether the BFD session is to be authenticated. For example, if the Authentication Present field (A) is set to a value of 1, the BFD control packet indicates that the BFD session is to be authenticated.

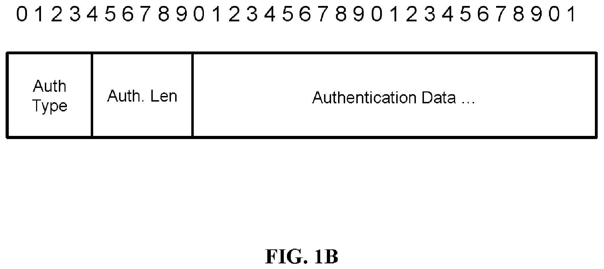

FIG. 1B shows an optional authentication section that is added to the BFD control packet of FIG. 1A when the Authentication Present field (A) is set. The Auth Type field indicates the type of authentication in use if the Authentication Present field (A) is set. As an example, the Auth Type field can indicate whether a simple password, secure hash algorithm 1 (SHA-1), or MD5 message-digest algorithm is used for authentication. The Auth Len field indicates the length of the authentication section, in bytes. The Authentication Data field includes authentication related information specific to an authentication type. Currently, if the Authentication Present field (A) (in FIG. 1A) is set, then each and every BFD control packet has to be authenticated by the network device using the information presented in the authentication section shown in FIG. 1B.

In FIG. 1A, the Length field indicates the length of the BFD control packet, in bytes. The My Discriminator field includes a unique, nonzero discriminator value generated by a transmitting device that can be used to demultiplex multiple BFD sessions between the same pair of systems. The Your Discriminator field includes a discriminator value unique for the corresponding remote BFD system. The Your Discriminator field can reflect back the received value of My Discriminator or it may be zero if unknown.

The Desired Min TX Interval field includes a value that is the minimum interval, in microseconds, that a device would like to use when transmitting BFD control packets, less any jitter applied. The Required Min RX Interval field includes a value that is the minimum interval, in microseconds, between received BFD control packets that a device is capable of supporting, less any jitter applied by the sending device. If the Required Min RX Interval field value is zero, the transmitting device does not want the remote system to send any periodic BFD control packets. The Required Min Echo RX Interval field includes a value that is the minimum interval, in microseconds, between received BFD Echo packets that a device is capable of supporting, less any jitter applied by a sending device. If the Required Min Echo RX Interval field value is zero, the transmitting device does not support the receipt of BFD Echo packets.

A BFD session begins when a device transmits BFD control packets to another device. When bidirectional communication is achieved, the BFD session is considered to be in an Up state. BFD related technology is further described in Request for Comment (RFC) 5880 and RFC 5881 by Internet Engineering Task Force (IETF).

### II. Exemplary Lightweight BFD Authentication Techniques

To overcome at least some of the technical issues with existing BFD authentication technology, this patent document describes techniques for a performing a lightweight authentication for a BFD session. The exemplary lightweight authentication techniques can be used to perform an opportunistic authentication or an authentication-at-will so that a network device can determine when an authentication is performed. For example, when a State field (Sta in FIG. 1A) of a BFD session is changed from an Init state to the Up state or from Up state to Down state or from the Down state to the Up state, the network device can perform a lightweight authentication as described in this patent document without expending significant computational resources and without interrupting the BFD session. In another example, a network device may perform lightweight authentication periodically, which may not require authentication of each and every BFD control packet.

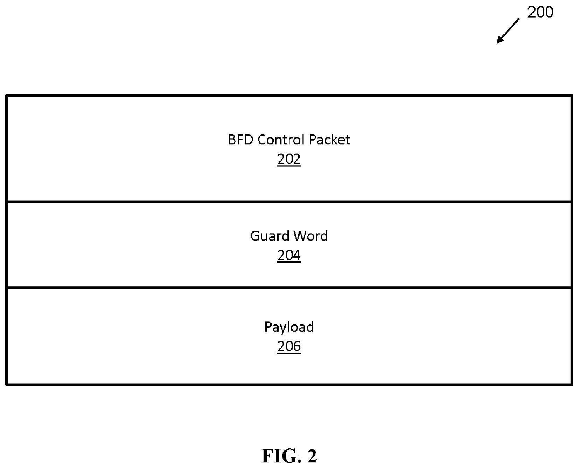

FIG. 2 shows an exemplary format for an extended BFD control packet to which a lightweight authentication capability can be added. The extended BFD control packet 200 includes a BFD control packet 202, a guard word 204, and a payload part 206. The BFD control packet 202 may include at least some of the information associated with the BFD control packet described in FIG. 1A. The features related to the extended BFD control packet are also described in International Patent Application No. PCT/CN2019/075808 filed on February 22, 2019.

The guard word 204 can be four octets long and can identify a device that sent or that generated the extended BFD control packet. The guard word can be a fixed pre-determined value that is not negotiated or is not dynamically assigned between two devices. For example, a first guard word can be associated with a device that is considered a "sender" of the extended BFD control packet and a second different guard word can be associated with a device that is considered a "responder" of the extended BFD control packet. The sender device can also receive an extended BFD control packet sent by the responder device, where the extended BFD control packet would include the second guard word associated with the responder device.

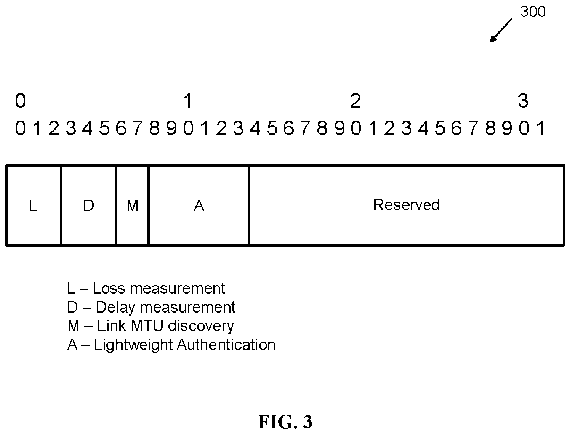

An extended BFD control packet also includes a payload part 206, where the contents of the payload part 206 depends on which of the two sets of operations are performed for an exemplary lightweight authentication process. The first set of operations for lightweight authentication includes a sender device performing negotiation with a responder device in a negotiation phase. The negotiation process enables the sender and/or responder devices to determine if authentication can be performed, and if so, the kind of authentication that can be performed. At the first set of operations, the sender device may include in the payload part 206 one or more blocks of data formatted as Capability Type-Length-Value (TLV) (300 in FIG. 3) to determine whether a responder device can perform the requested lightweight authentication.

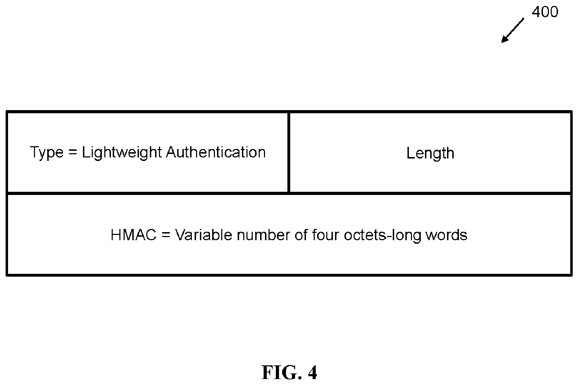

After the negotiation phase, a second set of operations can be performed in an authentication phase of the lightweight authentication. Generally, during the authentication phase, the sender device and the responder device can perform an authentication based on the outcome of the negotiation phase. At the second set of operations, the sender device may include in the payload part 206 one or more blocks of data formatted a Lightweight Authentication Type-Length-Value (TLV) (400 shown in FIG. 4) and optionally a Capability TLV (300 in FIG. 3). Each of these two sets of operations are further described in the context of FIGS. 3 to 5 below, and in the various embodiments described in this patent document.

In FIG. 3, the Capability TLV 300 can include information to allow a network device to indicate to another network device the information related to a requested lightweight authentication. The lightweight authentication field (A) in FIG. 3 can describe a type of authentication (e.g., SHA 1 or SHA-256), a length of the authentication data, and/or a mode of authentication (e.g., poll sequence or periodic messages). The Capability TLV can optionally include other fields that can indicate whether a loss measurement (L), a delay measurement (D), and/or a link MTU discovery (M) is to be performed by a responder device. In some embodiments, the Capability TLV, in turn, may include sub-TLVs.

In the lightweight authentication field (A), a type of authentication can indicate a cryptographic hash algorithm that the responder device can use for authentication. In some embodiments, where the Capability TLV is included in the extended BFD control packets during the authentication phase, the contents associated with the type of authentication in the Capability TLV may differ from the content in the Capability TLV used during negotiation phase. During the negotiation phase, the sender device and the receiver device may exchange extended BFD control packets in which the content associated with the type of authentication can indicate one or more types of authentication from which the sender device and/or the responder device select a type of authentication. Thus, during negotiation phase, the content of the type of authentication can include one or more values that can indicate one or more cryptographic hash algorithms that a device offers another device to use for authentication. After the negotiation phase, during the authentication phase, the sender device may send to the responder device an extended BFD control packet that includes a single type of authentication selected for authentication during the negotiation phase.

The length of authentication data indicates a number of bits that will be used for authentication during the authentication phase.

The mode of authentication can be indicated by another set of one or more values. For example, a periodic messaging mode of authentication can be indicated by a first value, which, during the negotiation phase, can indicate to the responder device that a periodic lightweight authentication is expected to be performed. In some embodiments, the frequency of the periodic message can also be indicated by the mode of authentication. In another example, a poll sequence mode of authentication can be indicated by a second value, which, during the negotiation phase, can indicate to a responder device that a sender device intends to perform a lightweight authentication to which the responder device is expected to respond. In some embodiments, the poll sequence for performing lightweight authentication can be initiated by a sender device when its state changes or when it determines that a responder device's state changes, where the state of a device is indicated by the State field of the BFD control packet (in FIG. 1A).

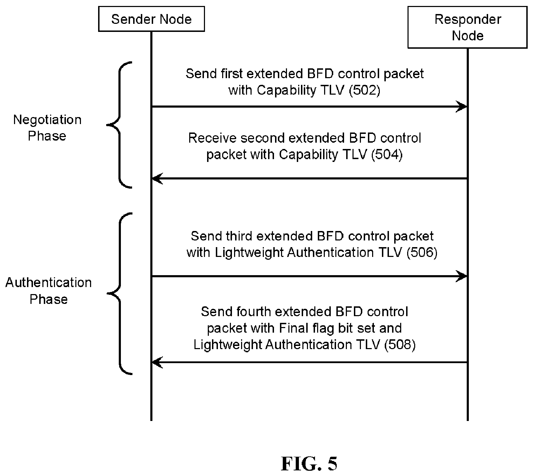

FIG. 5 shows the exemplary lightweight authentication process that includes a negotiation phase and an authentication phase. If the sender device indicates that the mode of authentication is a poll sequence, then the sender device and the responder device may perform the operations 502 to 508 as described in FIG. 5. If the sender device indicates that the mode of authentication is periodic messages, then the sender device and responder device may perform operations 502 and 504 once during a BFD session and may then perform operations 506 and 508 at a pre-determined time interval.

Operations 502 and 504 describe a first set of operations performed during the negotiation phase where a lightweight authentication process can be initiated. At operation 502, a sender device can send a first extended BFD control packet with a Poll field (P) set to a pre-determined value (e.g., 1) and Final field (F) clear, where the payload part includes a Capability TLV with the lightweight authentication field set to indicate the type of authentication, a length of the authentication data, and/or the mode of authentication.

Upon receiving the first extended BFD control packet, if the responder device determines that it can perform lightweight authentication based on the type of authentication and/or a mode of authentication included in the lightweight authentication field (A), then at operation 504, the responder device can send a second extended BFD control packet with the Final field (F) set to a value of 1 and including in the second extended BFD control packet the Capability TLV to be the same as the Capability TLV sent by the sender device. By sending matching Capability TLV, the responder device acknowledges that it can perform the authentication as indicated by the sender device's Capability TLV.

When performing lightweight authentication, the sender device and/or the responder device do not set the Authentication Present field (A) in the BFD control packet of the extended BFD control packet (e.g., by setting field (A) to value 0 or by not including any value in field (A)). Thus, an extended BFD control packet to be used for lightweight authentication does not include in the BFD control packet an indication of a type of authentication that triggers the responder device to perform authentication when each extended BFD control packet is sent to the responder device. Since the Authentication Present field (A) indicates that a responder device is not expected to perform authentication on each and every packet sent to the responder device, the BFD control packet in the extended BFD control packet also does not include the authentication section shown in FIG. 1B.

In some embodiments, the sender device may offer to the responder device a plurality of types of authentication from which the responder device may select a type of authentication. For example, the sender device may include a plurality of types of authentications (e.g., SHA-1, MD5, and/or SHA-256) in the Capability TLV of the first extended BFD control packet at operation 502, and the responder device may select the strongest authentication protocol/scheme or may select a type of authentication that can be performed by the responder device. A network device (e.g., a sender device or a responder device) may have a pre-determined list of types of authentication where the various types of authentication can be indicated along with their respective strength of authentication level, or where the various types of authentication can be sorted from the strongest authentication level to the weakest authentication level.

In some other embodiments, a responder device may suggest a different type of authentication from the one suggested by the sender device. For example, at operation 502, a sender device may send a first extended BFD control packet with a Capability TLV that includes a first type of authentication. However, if the responder device determines that the first type of authentication is not supported by or cannot be performed by the responder device, then at operation 504, the responder device can send to the sender device a second extended BFD control packet to request a second different type of authentication instead of the first type of authentication. In such embodiments, the responder device can send the second extended BFD control packet with the Final field (F) set to a value of 1, where the second extended BFD control packet includes the Capability TLV with the second type of authentication supported by the responder device. Upon receiving the second extended BFD control packet from the responder device, the sender device can determine that it can perform the second type of authentication and can proceed with the authentication phase.

In yet some other embodiments, the responder device may include in the second extended BFD control packet a plurality of types of authentication supported by the responder device. The second extended BFD control packet is sent with the Final field (F) set to a value of 1. The plurality of types of authentication may be indicated using a bitmap (e.g., value of 1 to indicate SHA-1 and value 3 to indicate SHA-256). When the sender device receives the second extended BFD control packet, the sender device can select the strongest authentication protocol/scheme (e.g., selecting SHA-256 over SHA-1) and proceed to the authentication phase.

In some embodiments, if the responder device determines during the negotiation phase that it cannot perform lightweight authentication based on the type of authentication and/or a mode of authentication included in the lightweight authentication field (A), then the responder device may not send any extended BFD control packet to the sender device and may not perform operation 504. Upon expiration of a timer, the sender device may determine that the responder device cannot perform the requested lightweight authentication. The timer may be set when the first extended BFD control packet is sent at operation 502.

After the negotiation phase, the sender device and the receiver device can perform a set of operations related to an authentication phase as shown in FIG. 5. During the authentication phase and at operation 506, the sender device can generate a third extended BFD control packet that includes a Poll field (P) set to a pre-determined value (e.g., 1), and a Lightweight Authentication TLV as shown in FIG. 4.

As shown in FIG. 4, the Lightweight Authentication TLV 400 can include a type field that can include a value that indicates that the contents of the TLV 400 relate to a lightweight authentication process. The Lightweight Authentication TLV 400 also includes a length field that can indicate a length of the authentication code, and a value field that that can include a keyed-hash message authentication code or hash-based message authentication code (HMAC). The length of the authentication code included in the value field of the Lightweight Authentication TLV is the same as the length of the authentication data indicated by the length field in Capability TLV. In some embodiments, the Lightweight Authentication TLV may be the last TLV in an extended BFD control packet.

In some embodiments, the third extended BFD control packet may also include a Capability TLV if the sender device may determine additional capability need to be negotiated after the sender device has negotiated the use of the lightweight authentication with the responder device. The Capability TLV includes information related to the mode of authentication, length of the authentication data, and/or a single type of authentication selected or negotiated during the negotiation phase. In such embodiments, the Capability TLV may include additional capability information in a TLV format to perform additional negotiations with the responder device during the authentication phase.

In FIG. 5, after the responder device receives the third extended BFD control packet, the responder device performs a verification operation based on the authentication code received in the Lightweight Authentication TLV and based on the single type of authentication included in the Capability TLV. The verification operation can include the responder device performing an authentication technique based on the authentication code and the single type of authentication. If the responder device determines that the result of the verification operation is a successful authentication operation, then the responder device can send a fourth extended BFD control packet at operation 508 with the Final field (F) bit set. The fourth extended BFD control packet also includes the information included in the Lightweight Authentication TLV in the third extended BFD control packet. In some embodiments, the fourth extended BFD control packet may include a Capability TLV if the sender device includes the Capability TLV in the third extended BFD control packet for additional negotiations during the authentication phase.

In some embodiments, if the responder device determines that the result of the verification operation is an unsuccessful authentication operation, then the responder device may not send a fourth extended BFD control packet with the Final field (F) bit set. In such embodiments, the sender device may determine that the authentication has been unsuccessful after a timer has expired. The timer may be set when the third extended BFD control packet is sent at operation 506. If the sender device determines that authentication is unsuccessful, then the sender device may generate and send a message to be displayed to an operator.

The message can indicate that the authentication operation has been unsuccessful and can identify the responder device. In some embodiments, the message can provide an option to the operator that when selected, instructs the sender device to reset the timer and resend the third extended BFD control packet to the responder device so that the responder device can repeat the verification operation. In some embodiments, if the sender device determines that the responder device has performed a number of unsuccessful verification operations that exceed a pre-determined threshold value (e.g., 5), then the sender device can declare that the responder device's BFD session is in the down state.

The term sender device or responder device used in this patent document can include a router, a switch, a server, any network equipment, or any equipment that performs a networking role (e.g., a network function that may be performed by a server).

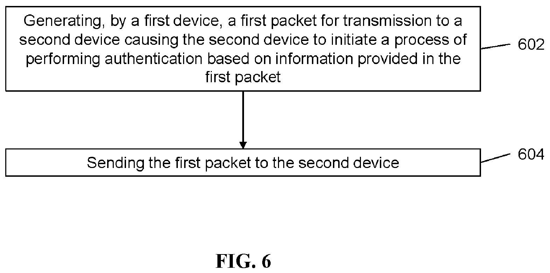

FIG. 6 shows an exemplary flowchart for a sender device receiving and processing extended BFD control packet(s) with the Lightweight Authentication TLV.

At the generating operation 602, a first device generates a first packet for transmission to a second device causing the second device to initiate a process of performing authentication based on information provided in the first packet. The first packet includes: a first control message including a first bi-directional forwarding detection (BFD) session information, where the first control message includes a poll flag value that indicates that the first device is expecting to receive a packet from the second device, a first identifier associated with the first device, and a first payload that includes a type of authentication to be performed by the second device, a mode of authentication that indicates that the second device is to perform either a periodic authentication or a one-time authentication, and a length of an authentication data to be used by the second device during authentication. At the sending operation 604, the first device sends the first packet to the second device.

In some embodiments, the method of FIG. 6 further includes receiving, by the first device and after the sending the first packet, a second packet from the second device, where the second packet includes: a second control message including a second BFD session information, where the second control message includes a final flag value that indicates that the second packet is sent in response to the first packet, a second identifier associated with the second device, and a second payload that includes the type of authentication that indicates to the first device that the second device is configured to perform authentication using the type of authentication indicated by the first payload, the mode of authentication, and the length of the authentication data.

In some embodiments, the method of FIG. 6 further includes sending, by the first device and after the receiving the second packet, a third packet to the second device, where the third packet includes: a third control message including a third BFD session information, where the third control message includes a poll flag value that indicates that the first device is expecting to receive a packet from the second device, the first identifier associated with the first device, and a third payload that includes a set of values that include a value that indicates that the set of values are related to a lightweight authentication process, the length of the authentication data, and the authentication data, where the second device performs an authentication based on information included in the third payload; and receiving, by the first device, a fourth packet from the second device, where the fourth packet includes: a fourth control message including a fourth BFD session information, where the fourth control message includes a final flag value that indicates that the fourth packet is sent in response to the third packet, the set of values, and the second identifier associated with the second device. The set of values in the fourth control message include the value that indicates that the set of values are related to the lightweight authentication process, the length of the authentication data, and the authentication data.

In some embodiments, the first identifier is a first pre-determined value, and where the second identifier is a second different pre-determined value. In some embodiments, the method of FIG. 6 further includes starting a timer, by the first device, when the first packet is sent; determining an absence of a reception of a second packet from the second device before an expiration of the timer; and determining, after the determining of the absence of the second packet, that the second device is unable to perform authentication.

In some embodiments, the first control message excludes an indication of another type of authentication that triggers the second device to perform authentication when each packet with an authentication section is sent to the second device.

In some embodiments, the method of FIG. 6 further includes receiving, by the first device after the sending the first packet, a second packet from the second device, where the second packet includes: a second control message including a second BFD session information, where the second control message includes a final flag value that indicates that the second packet is sent in response to the first packet, a second identifier associated with the second device, and a second payload that includes one or more additional types of authentication that indicates to the first device that the second device is configured to perform authentication using the one or more additional types of authentication, the mode of authentication, and the length of the authentication data; selecting, by the first device and based on a selection criterion, a second type of authentication from the one or more additional types of authentication; sending, by the first device and after the selecting, a third packet to the second device, where the third packet includes: a third control message including a third BFD session information, where the third control message includes a poll flag value that indicates that the first device is expecting to receive a packet from the second device, the first identifier associated with the first device, and a third payload that includes a set of values that include a value that indicates that the set of values are related to a lightweight authentication process, the length of the authentication data, and the authentication data, where the second device performs an authentication based on information included in the third payload; and receiving, by the first device, a fourth packet from the second device, where the fourth packet includes: a fourth control message including a fourth BFD session information, where the fourth control message includes a final flag value that indicates that the fourth packet is sent in response to the third packet, the set of values, and the second identifier associated with the second device. The set of values in the fourth control message include the value that indicates that the set of values are related to the lightweight authentication process, the length of the authentication data, and the authentication data.

In some embodiments, the selection criterion includes a strongest authentication scheme or protocol, and the second type of authentication has the strongest authentication scheme or protocol from the one or more additional types of authentication.

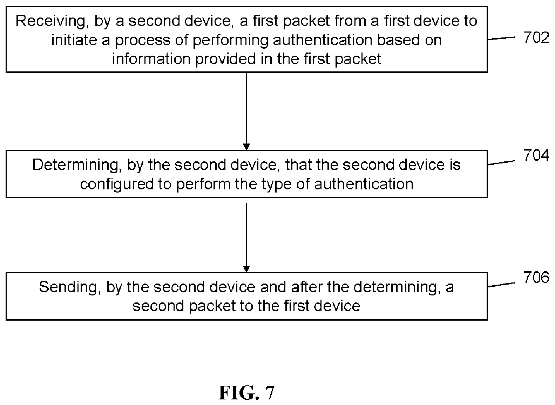

FIG. 7 shows an exemplary flowchart for a responder device receiving and processing extended BFD control packet(s) with the Lightweight Authentication TLV.

At the receiving operation 704, a second device receives a first packet from a first device to initiate a process of performing authentication based on information provided in the first packet. The first packet includes: a first control message including a first bi-directional forwarding detection (BFD) session information, where the first control message includes a poll flag value that indicates that the first device is expecting to receive a packet from the second device, a first identifier associated with the first device, and a first payload that includes a type of authentication to be performed by the second device, a mode of authentication that indicates that the second device is to perform either a periodic authentication or a one-time authentication, and a length of an authentication data to be used by the second device during authentication.

At the determining operation 704, the second device determines that the second device is configured to perform the type of authentication. After the determining operation 704, the second device performs the sending operation 706 where the second device sends a second packet to the first device. The second packet includes: a second control message including a second BFD session information, where the second control message includes a final flag value that indicates that the second packet is sent in response to the first packet, a second identifier associated with the second device, and a second payload that includes the type of authentication that indicates to the first device that the second device is configured to perform authentication using the type of authentication indicated by the first payload, the mode of authentication, and the length of the authentication data.

In some embodiments, the method of FIG. 7 further includes receiving, by the second device, a third packet from the first device, where the third packet includes: a third control message including a third BFD session information, where the third control message includes a poll flag value that indicates that the first device is expecting to receive a packet from the second device, the first identifier associated with the first device, and a third payload that includes a set of values that include a value that indicates that the set of values are related to a lightweight authentication process, the length of the authentication data, and the authentication data; performing, by the second device, an authentication based on information included in the third payload; determining, by the second device, that the authentication is successful; and sending, by the second device after the determining that the authentication is successful, a fourth packet to the first device, where the fourth packet includes: a fourth control message including a fourth BFD session information, where the fourth control message includes a final flag value that indicates that the fourth packet is sent in response to the third packet, the set of values, and the second identifier associated with the second device. The set of values in the fourth control message include the value that indicates that the set of values are related to the lightweight authentication process, the length of the authentication data, and the authentication data.

In some embodiments, the first identifier is a first pre-determined value, and where the second identifier is a second different pre-determined value. In some embodiments, the first control message excludes an indication of another type of authentication that triggers the second device to perform authentication when each packet with an authentication section is received by the second device.

In some embodiments, the method of FIG. 7 further includes sending, by the second device after the receiving the first packet, a second packet to the first device, where the second packet includes: a second control message including a second BFD session information, where the second control message includes a final flag value that indicates that the second packet is sent in response to the first packet, a second identifier associated with the second device, and a second payload that includes one or more additional types of authentication that indicates to the first device that the second device is configured to perform authentication using the one or more additional types of authentication, the mode of authentication, and the length of the authentication data; receiving, by the second device, a third packet from the first device, where the third packet includes: a third control message including a third BFD session information, where the third control message includes a poll flag value that indicates that the first device is expecting to receive a packet from the second device, the first identifier associated with the first device, and a third payload that includes a set of values that include a value that indicates that the set of values are related to a lightweight authentication process, the length of the authentication data, and the authentication data, where the second type of authentication is selected from the one or more additional types of authentication; and performing, by the second device, an authentication based on information included in the third payload; determining, by the second device, that the authentication is successful; and sending, by the second device after the determining that the authentication is successful, a fourth packet to the first device, where the fourth packet includes: a fourth control message including a fourth BFD session information, where the fourth control message includes a final flag value that indicates that the fourth packet is sent in response to the third packet, the set of values, and the second identifier associated with the second device. The set of values in the fourth control message include the value that indicates that the set of values are related to the lightweight authentication process, the length of the authentication data, and the authentication data. In some embodiments, the second type of authentication has the strongest authentication scheme or protocol from the one or more additional types of authentication.

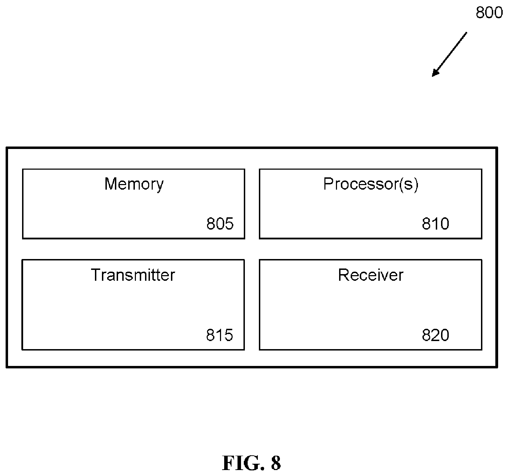

FIG. 8 shows an exemplary block diagram of a hardware platform 800 that may be a part of a network device (e.g., sender device or responder device). The hardware platform 800 includes at least one processor 810 and a memory 805 having instructions stored thereupon. The instructions upon execution by the processor 810 configure the hardware platform 800 to perform the operations described in FIGS. 1 to 7, and in the various embodiments described in this patent document. The transmitter 815 transmits or sends information or data to another device. For example, a device's transmitter can send an extended BFD control packet to another device. The receiver 820 receives information or data transmitted or sent by another node. For example, a device's receiver can receive an extended BFD control packet from another device.

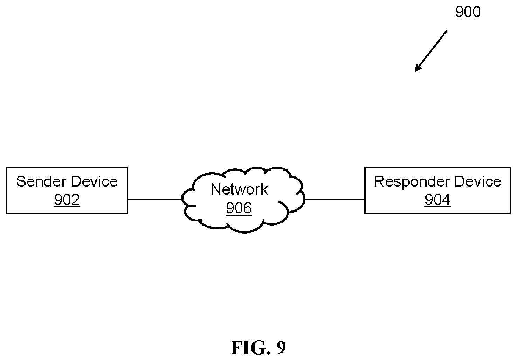

FIG. 9 shows an example of a system for generating or using the extended BFD control packet. The sender device 902 and the responder device 904 can communicate with each other via a network 906, such as the Internet. The sender and responder devices 902, 904 can be a part of a network 900 that may include additional sender and/or responder devices. The sender device 902 and the responder device 904 may perform the operations described in this patent document for the sender device and responder device, respectively.

In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A packet communication method, comprising:
generating (602), by a first device, a first packet for transmission to a second device causing the second device to initiate a process of performing authentication based on information provided in the first packet, wherein the first packet includes:
a first control message including a first bi-directional forwarding detection, BFD, session information, wherein the first control message includes a poll flag value that indicates that the first device is expecting to receive a packet from the second device,
a first identifier associated with the first device, and
a first payload that includes a type of authentication to be performed by the second device, a mode of authentication that indicates that the second device is to perform a periodic authentication, and a length of an authentication data to be used by the second device during authentication, wherein a frequency of messages for the periodic authentication is indicated by the mode of authentication,
wherein the first control message:
excludes a value in an authentication present field (A) in the first control message when a lightweight authentication process is performed by the first device and the second device, and
excludes from an authentication section in the first control message an indication (Auth Type) of another type of authentication, another authentication length (Auth. Len) of another authentication data, and the another authentication data (Authentication Data) that triggers the second device to perform authentication when each packet with the authentication section is sent to the second device; and sending (604) the first packet to the second device.

2. The method of claim 1, further comprising:
receiving, by the first device and after the sending the first packet, a second packet from the second device, wherein the second packet includes:
a second control message including a second BFD session information, wherein the second control message includes a final flag value that indicates that the second packet is sent in response to the first packet,
a second identifier associated with the second device, and
a second payload that includes the type of authentication that indicates to the first device that the second device is configured to perform authentication using the type of authentication indicated by the first payload, the mode of authentication, and the length of the authentication data.

3. The method of claim 2, further comprising:
sending, by the first device after the receiving the second packet, a third packet to the second device, wherein the third packet includes:
a third control message including a third BFD session information, wherein the third control message includes a poll flag value that indicates that the first device is expecting to receive a packet from the second device,
the first identifier associated with the first device, and
a third payload that includes a set of values that include a second value that indicates that the set of values are related to the lightweight authentication process, the length of the authentication data, and the authentication data,
wherein the second device performs an authentication based on information included in the third payload; and
receiving, by the first device, a fourth packet from the second device, wherein the fourth packet includes:
a fourth control message including a fourth BFD session information, wherein the fourth control message includes a final flag value that indicates that the fourth packet is sent in response to the third packet, and the set of values, and
the second identifier associated with the second device.

4. The method of claim 2, wherein the first identifier is a first pre-determined value, and wherein the second identifier is a second different pre-determined value.

5. The method of claim 1, further comprising:
starting a timer, by the first device, when the first packet is sent;
determining an absence of a reception of a second packet from the second device before an expiration of the timer; and
determining, after the determining of the absence of the second packet, that the second device is unable to perform authentication.

6. A packet communication method, comprising:
receiving (702), by a second device, a first packet from a first device to initiate a process of performing authentication based on information provided in the first packet, wherein the first packet includes:
a first control message including a first bi-directional forwarding detection, BFD, session information, wherein the first control message includes a poll flag value that indicates that the first device is expecting to receive a packet from the second device,
a first identifier associated with the first device, and
a first payload that includes a type of authentication to be performed by the second device, a mode of authentication that indicates that the second device is to perform a periodic authentication, and a length of an authentication data to be used by the second device during authentication, wherein a frequency of messages for the periodic authentication is indicated by the mode of authentication,
wherein the first control message:
excludes a value in an authentication present field in the first control message when a lightweight authentication process is performed by the first device and the second device, and
excludes from an authentication section in the first control message an indication of another type of authentication, another authentication length of another authentication data, and the another authentication data that triggers the second device to perform authentication when each packet with the authentication section is received by the second device;
determining (704), by the second device, that the second device is configured to perform the type of authentication; and
sending (706), by the second device and after the determining, a second packet to the first device, wherein the second packet includes:
a second control message including a second BFD session information, wherein the second control message includes a final flag value that indicates that the second packet is sent in response to the first packet,
a second identifier associated with the second device, and
a second payload that includes the type of authentication that indicates to the first device that the second device is configured to perform authentication using the type of authentication indicated by the first payload, the mode of authentication, and the length of the authentication data.

7. The method of claim 6, further comprising:
receiving, by the second device, a third packet from the first device, wherein the third packet includes:
a third control message including a third BFD session information, wherein the third control message includes a poll flag value that indicates that the first device is expecting to receive a packet from the second device,
the first identifier associated with the first device, and
a third payload that includes a set of values that include a second value that indicates that the set of values are related to the lightweight authentication process, the length of the authentication data, and the authentication data;
performing, by the second device, an authentication based on information included in the third payload;
determining, by the second device, that the authentication is successful; and
sending, by the second device after the determining that the authentication is successful, a fourth packet to the first device, wherein the fourth packet includes:
a fourth control message including a fourth BFD session information, wherein the fourth control message includes a final flag value that indicates that the fourth packet is sent in response to the third packet, and the set of values, and
the second identifier associated with the second device.

8. The method of claim 6, wherein the first identifier is a first pre-determined value, and wherein the second identifier is a second different pre-determined value.

9. The method of claim 7, further comprising:
sending, by the second device after the receiving the first packet, a second packet to the first device, wherein the second packet includes:
a second control message including a second BFD session information, wherein the second control message includes a final flag value that indicates that the second packet is sent in response to the first packet,
a second identifier associated with the second device, and
a second payload that includes one or more additional types of authentication that indicates to the first device that the second device is configured to perform authentication using the one or more additional types of authentication, the mode of authentication, and the length of the authentication data;
receiving, by the second device, a third packet from the first device, wherein the third packet includes:
a third control message including a third BFD session information, wherein the third control message includes a poll flag value that indicates that the first device is expecting to receive a packet from the second device,
the first identifier associated with the first device, and
a third payload that includes a set of values that include a second value that indicates that the set of values are related to the lightweight authentication process, the length of the authentication data, and the authentication data,
wherein the second type of authentication is selected from the one or more additional types of authentication; and
performing, by the second device, an authentication based on information included in the third payload;
determining, by the second device, that the authentication is successful; and
sending, by the second device after the determining that the authentication is successful, a fourth packet to the first device, wherein the fourth packet includes:
a fourth control message including a fourth BFD session information, wherein the fourth control message includes a final flag value that indicates that the fourth packet is sent in response to the third packet, and the set of values, and
the second identifier associated with the second device.

10. The method of claim 9, wherein the second type of authentication has the strongest authentication scheme or protocol from the one or more additional types of authentication.

11. An apparatus for packet communication comprising a processor, configured to implement a method recited in one or more of claims 1 to 10.

12. A computer readable program storage medium having code stored thereon, the code, when executed by a processor, causing the processor to implement a method recited in one or more of claims 1 to 10.

## Patentansprüche

1. Paketkommunikationsverfahren, aufweisend:
Erzeugen (602), durch eine erste Vorrichtung, eines ersten Pakets zur Übertragung an eine zweite Vorrichtung, wodurch die zweite Vorrichtung veranlasst wird, einen Prozess zum Durchführen einer Authentifizierung anhand von Informationen einzuleiten, die in dem ersten Paket bereitgestellt sind, wobei das erste Paket Folgendes aufweist:
eine erste Steuernachricht, die eine erste bidirektionale Weiterleitungserkennungs-, BFD-, Sitzungsinformation aufweist, wobei die erste Steuernachricht einen Poll-Flag-Wert aufweist, der anzeigt, dass die erste Vorrichtung das Empfangen eines Pakets von der zweiten Vorrichtung erwartet,
eine erste Kennung, die der ersten Vorrichtung zugeordnet ist, und
eine erste Nutzlast, die eine Art der Authentifizierung, die durch die zweite Vorrichtung durchgeführt werden soll, einen Authentifizierungsmodus, der anzeigt, dass die zweite Vorrichtung eine periodische Authentifizierung durchführen soll, und eine Länge von Authentifizierungsdaten aufweist, die von der zweiten Vorrichtung während der Authentifizierung verwendet werden soll, wobei eine Häufigkeit von Nachrichten für die periodische Authentifizierung durch den Authentifizierungsmodus angezeigt wird,
wobei die erste Steuernachricht:
einen Wert in einem Authentifizierungsfeld (A) in der ersten Steuernachricht ausschließt, wenn ein leichter Authentifizierungsprozess von der ersten Vorrichtung und der zweiten Vorrichtung durchgeführt wird, und
aus einem Authentifizierungsabschnitt in der ersten Steuernachricht eine Angabe (Auth Type) einer anderen Art der Authentifizierung, eine andere Authentifizierungslänge (Auth. Len) anderer Authentifizierungsdaten und die anderen Authentifizierungsdaten (Authentication Data) ausschließt, die die zweite Vorrichtung veranlassen, eine Authentifizierung durchzuführen, wenn jedes Paket mit dem Authentifizierungsabschnitt an die zweite Vorrichtung gesendet wird; und
Senden (604) des ersten Pakets an die zweite Vorrichtung.

2. Verfahren nach Anspruch 1, ferner aufweisend:
Empfangen, durch die erste Vorrichtung und nach dem Senden des ersten Pakets, eines zweiten Pakets von der zweiten Vorrichtung, wobei das zweite Paket Folgendes aufweist:
eine zweite Steuernachricht, die eine zweite BFD-Sitzungsinformation aufweist, wobei die zweite Steuernachricht einen finalen Flag-Wert aufweist, der anzeigt, dass das zweite Paket als Reaktion auf das erste Paket gesendet wird,
eine zweite Kennung, die der zweiten Vorrichtung zugeordnet ist, und
eine zweite Nutzlast, die die Art der Authentifizierung aufweist, die der ersten Vorrichtung anzeigt, dass die zweite Vorrichtung so konfiguriert ist, dass sie eine Authentifizierung unter Verwendung der Art der Authentifizierung, die durch die erste Nutzlast angezeigt wird, des Authentifizierungsmodus und der Länge der Authentifizierungsdaten durchführt.

3. Verfahren nach Anspruch 2, ferner aufweisend:
Senden, durch die erste Vorrichtung nach dem Empfangen des zweiten Pakets, eines dritten Pakets an die zweite Vorrichtung, wobei das dritte Paket Folgendes aufweist:
eine dritte Steuernachricht, die eine dritte BFD-Sitzungsinformation aufweist, wobei die dritte Steuernachricht einen Poll-Flag-Wert aufweist, der anzeigt, dass die erste Vorrichtung das Empfangen eines Pakets von der zweiten Vorrichtung erwartet,
die erste Kennung, die der ersten Vorrichtung zugeordnet ist, und
eine dritte Nutzlast, die einen Satz von Werten aufweist, der einen zweiten Wert aufweist, der anzeigt, dass der Satz von Werten sich auf den leichten Authentifizierungsprozess, die Länge der Authentifizierungsdaten und die Authentifizierungsdaten bezieht,
wobei die zweite Vorrichtung eine Authentifizierung anhand von Informationen durchführt, die in der dritten Nutzlast umfasst sind; und
Empfangen, durch die erste Vorrichtung, eines vierten Pakets von der zweiten Vorrichtung, wobei das vierte Paket Folgendes aufweist:
eine vierte Steuernachricht, die eine vierte BFD-Sitzungsinformation aufweist, wobei die vierte Steuernachricht einen finalen Flag-Wert aufweist, der anzeigt, dass das vierte Paket als Reaktion auf das dritte Paket gesendet wird, und den Satz von Werten, und
die zweite Kennung, die der zweiten Vorrichtung zugeordnet ist.

4. Verfahren nach Anspruch 2, wobei die erste Kennung ein erster vorbestimmter Wert ist, und wobei die zweite Kennung ein zweiter unterschiedlicher vorbestimmter Wert ist.

5. Verfahren nach Anspruch 1, ferner aufweisend:
Starten eines Zeitgebers, durch die erste Vorrichtung, wenn das erste Paket gesendet wird;
Bestimmen des Nichtempfangens eines zweiten Pakets von der zweiten Vorrichtung vor Ablauf des Zeitgebers; und
Bestimmen, nachdem das Nichtvorhandensein des zweiten Pakets bestimmt wurde, dass die zweite Vorrichtung nicht in der Lage ist, eine Authentifizierung durchzuführen.

6. Paketkommunikationsverfahren, aufweisend:
Empfangen (702), durch eine zweite Vorrichtung, eines ersten Pakets von einer ersten Vorrichtung, um einen Prozess zum Durchführen einer Authentifizierung anhand von Informationen einzuleiten, die in dem ersten Paket bereitgestellt sind, wobei das erste Paket Folgendes aufweist:
eine erste Steuernachricht, die eine erste bidirektionale Weiterleitungserkennungs- (Engl. bi-directional forwarding detection), BFD-, Sitzungsinformation aufweist, wobei die erste Steuernachricht einen Poll-Flag-Wert aufweist, der anzeigt, dass die erste Vorrichtung das Empfangen eines Pakets von der zweiten Vorrichtung erwartet,
eine erste Kennung, die der ersten Vorrichtung zugeordnet ist, und
eine erste Nutzlast, die eine Art der Authentifizierung aufweist, die durch die zweite Vorrichtung durchgeführt werden soll, einen Authentifizierungsmodus aufweist, der anzeigt, dass die zweite Vorrichtung eine periodische Authentifizierung durchführen soll, und eine Länge von Authentifizierungsdaten aufweist, die von der zweiten Vorrichtung während der Authentifizierung verwendet werden soll, wobei eine Häufigkeit von Nachrichten für die periodische Authentifizierung durch den Authentifizierungsmodus angezeigt wird,
wobei die erste Steuernachricht:
einen Wert in einem Authentifizierungsfeld in der ersten Steuernachricht ausschließt, wenn ein leichter Authentifizierungsprozess durch die erste Vorrichtung und die zweite Vorrichtung durchgeführt wird, und
aus einem Authentifizierungsabschnitt in der ersten Steuernachricht eine Angabe einer anderen Art der Authentifizierung, eine andere Authentifizierungslänge anderer Authentifizierungsdaten und die anderen Authentifizierungsdaten ausschließt, die die zweite Vorrichtung veranlassen, eine Authentifizierung durchzuführen, wenn jedes Paket mit dem Authentifizierungsabschnitt durch die zweite Vorrichtung empfangen wird;
Bestimmen (704), durch die zweite Vorrichtung, dass die zweite Vorrichtung so konfiguriert ist, dass sie die Art der Authentifizierung durchführt; und
Senden (706), durch die zweite Vorrichtung und nach dem Bestimmen, eines zweiten Pakets an die erste Vorrichtung, wobei das zweite Paket Folgendes aufweist:
eine zweite Steuernachricht, die eine zweite BFD-Sitzungsinformation aufweist, wobei die zweite Steuernachricht einen finalen Flag-Wert aufweist, der anzeigt, dass das zweite Paket als Reaktion auf das erste Paket gesendet wird,
eine zweite Kennung, die der zweiten Vorrichtung zugeordnet ist, und
eine zweite Nutzlast, die die Art der Authentifizierung aufweist, die der ersten Vorrichtung anzeigt, dass die zweite Vorrichtung so konfiguriert ist, dass sie eine Authentifizierung unter Verwendung der Art der Authentifizierung, die durch die erste Nutzlast angezeigt wird, des Authentifizierungsmodus und der Länge der Authentifizierungsdaten durchführt.

7. Verfahren nach Anspruch 6, ferner aufweisend:
Empfangen, durch die zweite Vorrichtung, eines dritten Pakets von der ersten Vorrichtung, wobei das dritte Paket Folgendes aufweist:
eine dritte Steuernachricht, die eine dritte BFD-Sitzungsinformation aufweist, wobei die dritte Steuernachricht einen Poll-Flag-Wert aufweist, der anzeigt, dass die erste Vorrichtung das Empfangen eines Pakets von der zweiten Vorrichtung erwartet,
die erste Kennung, die der ersten Vorrichtung zugeordnet ist, und
eine dritte Nutzlast, die einen Satz von Werten aufweist, der einen zweiten Wert aufweist, der anzeigt, dass der Satz von Werten sich auf den leichten Authentifizierungsprozess, die Länge der Authentifizierungsdaten und die Authentifizierungsdaten bezieht;
Durchführen, durch die zweite Vorrichtung, einer Authentifizierung anhand von Informationen, die in der dritten Nutzlast umfasst sind;
Bestimmen, durch die zweite Vorrichtung, dass die Authentifizierung erfolgreich ist; und
Senden, durch die zweite Vorrichtung nach dem Bestimmen, dass die Authentifizierung erfolgreich ist, eines vierten Pakets an die erste Vorrichtung, wobei das vierte Paket Folgendes aufweist:
eine vierte Steuernachricht, die eine vierte BFD-Sitzungsinformation aufweist, wobei die vierte Steuernachricht einen finalen Flag-Wert aufweist, der anzeigt, dass das vierte Paket als Reaktion auf das dritte Paket gesendet wird, und den Satz von Werten, und
die zweite Kennung, die der zweiten Vorrichtung zugeordnet ist.

8. Verfahren nach Anspruch 6, wobei die erste Kennung ein erster vorbestimmter Wert ist, und wobei die zweite Kennung ein zweiter unterschiedlicher vorbestimmter Wert ist.

9. Verfahren nach Anspruch 7, ferner aufweisend:
Senden, durch die zweite Vorrichtung nach dem Empfangen des ersten Pakets, eines zweiten Pakets an die erste Vorrichtung, wobei das zweite Paket Folgendes aufweist:
eine zweite Steuernachricht, die eine zweite BFD-Sitzungsinformation aufweist, wobei die zweite Steuernachricht einen finalen Flag-Wert aufweist, der anzeigt, dass das zweite Paket als Reaktion auf das erste Paket gesendet wird,
eine zweite Kennung, die der zweiten Vorrichtung zugeordnet ist, und
eine zweite Nutzlast, die eine oder mehrere zusätzliche Arten der Authentifizierung aufweist, die der ersten Vorrichtung anzeigt, dass die zweite Vorrichtung so konfiguriert ist, dass sie eine Authentifizierung unter Verwendung der einen oder mehreren zusätzlichen Arten der Authentifizierung, des Authentifizierungsmodus und der Länge der Authentifizierungsdaten durchführt;
Empfangen, durch die zweite Vorrichtung, eines dritten Pakets von der ersten Vorrichtung, wobei das dritte Paket Folgendes aufweist:
eine dritte Steuernachricht, die eine dritte BFD-Sitzungsinformation aufweist, wobei die dritte Steuernachricht einen Poll-Flag-Wert aufweist, der anzeigt, dass die erste Vorrichtung das Empfangen eines Pakets von der zweiten Vorrichtung erwartet,
die erste Kennung, die der ersten Vorrichtung zugeordnet ist, und
eine dritte Nutzlast, die einen Satz von Werten aufweist, der einen zweiten Wert aufweist, der anzeigt, dass der Satz von Werten sich auf den leichten Authentifizierungsprozess, die Länge der Authentifizierungsdaten und die Authentifizierungsdaten bezieht,
wobei die zweite Art der Authentifizierung ausgewählt ist aus der einen oder mehreren zusätzlichen Arten der Authentifizierung; und
Durchführen, durch die zweite Vorrichtung, einer Authentifizierung anhand von Informationen, die in der dritten Nutzlast umfasst sind;
Bestimmen, durch die zweite Vorrichtung, dass die Authentifizierung erfolgreich ist; und
Senden, durch die zweite Vorrichtung nach dem Bestimmen, dass die Authentifizierung erfolgreich ist, eines vierten Pakets an die erste Vorrichtung, wobei das vierte Paket Folgendes aufweist:
eine vierte Steuernachricht, die eine vierte BFD-Sitzungsinformation aufweist, wobei die vierte Steuernachricht einen finalen Flag-Wert aufweist, der anzeigt, dass das vierte Paket als Reaktion auf das dritte Paket gesendet wird, und den Satz von Werten, und
die zweite Kennung, die der zweiten Vorrichtung zugeordnet ist.

10. Verfahren nach Anspruch 9, wobei die zweite Art der Authentifizierung das stärkste Authentifizierungsschema oder -protokoll der einen oder mehreren zusätzlichen Arten der Authentifizierung aufweist.

11. Vorrichtung zur Paketkommunikation, aufweisend einen Prozessor, der so konfiguriert ist, dass er ein Verfahren implementiert, das in einem oder mehreren der Ansprüche 1 bis 10 genannt ist.

12. Computerlesbares Programm-Speichermedium, das darauf gespeicherten Code aufweist, wobei der Code, wenn er durch einen Prozessor ausgeführt wird, den Prozessor veranlasst, ein Verfahren zu implementieren, das in einem oder mehreren der Ansprüche 1 bis 10 genannt ist.

## Revendications

1. Procédé de communication par paquets, comprenant :
la génération (602), par un premier dispositif, d'un premier paquet pour la transmission à un second dispositif amenant le second dispositif à initier un processus de réalisation d'authentification sur la base d'informations fournies dans le premier paquet, dans lequel le premier paquet inclut :
un premier message de commande incluant une première information de session de détection de retransmission bidirectionnelle, **BFD,** dans lequel le premier message de commande inclut une valeur d'indicateur d'interrogation qui indique que le premier dispositif attend de recevoir un paquet en provenance du second dispositif,
un premier identifiant associé au premier dispositif, et
une première charge utile qui inclut un type d'authentification devant être réalisé par le second dispositif, un mode d'authentification qui indique que le second dispositif doit réaliser une authentification périodique, et une longueur d'une donnée d'authentification devant être utilisée par le second dispositif pendant l'authentification, dans lequel une fréquence de messages pour l'authentification périodique est indiquée par le mode d'authentification,
dans lequel le premier message de commande :
exclut une valeur dans un champ présent d'authentification (A) dans le premier message de commande lorsqu'un processus d'authentification allégé est réalisé par le premier dispositif et le second dispositif, et
exclut d'une section d'authentification dans le premier message de commande une indication (Auth Type) d'un autre type d'authentification, une autre longueur d'authentification (Auth. Len) d'une autre donnée d'identification, et l'autre donnée d'identification (Authentification Data) qui déclenche le second dispositif pour réaliser une authentification lorsque chaque paquet avec la section d'authentification est envoyé au second dispositif ; et
l'envoi (604) du premier paquet au second dispositif.

2. Procédé selon la revendication 1, comprenant en outre :
la réception, par le premier dispositif et avant l'envoi du premier paquet, d'un deuxième paquet en provenance du second dispositif, dans lequel le deuxième paquet inclut :
un deuxième message de commande incluant une deuxième information de session de **BFD,** dans lequel le deuxième message de commande inclut une valeur d'indicateur finale qui indique que le deuxième paquet est envoyé en réponse au premier paquet :
un second identifiant associé au second dispositif, et
une deuxième charge utile qui inclut le type d'authentification qui indique au premier dispositif que le second dispositif est configuré pour réaliser une authentification au moyen du type d'authentification indiqué par la première charge utile, du mode d'identification, et de la longueur des données d'authentification.

3. Procédé selon la revendication 2, comprenant en outre :
l'envoi, par le premier dispositif après la réception du deuxième paquet, d'un troisième paquet au second dispositif, dans lequel le troisième paquet inclut :
un troisième message de commande incluant une troisième information de session de BFD, dans lequel le troisième message de commande inclut une valeur d'indicateur d'interrogation qui indique que le premier dispositif attend de recevoir un paquet en provenance du second dispositif,
le premier identifiant associé au premier dispositif, et
une troisième charge utile qui inclut un ensemble de valeurs qui inclut une seconde valeur qui indique que l'ensemble de valeurs est relatif au processus d'authentification allégé, à la longueur des données d'authentification, et aux données d'authentification,
dans lequel le second dispositif réalise une authentification basée sur des informations incluses dans la troisième charge utile ; et
la réception, par le premier dispositif, d'un quatrième paquet en provenance du second dispositif, dans lequel le quatrième paquet inclut :
un quatrième message de commande incluant une quatrième information de session de BFD, dans lequel le quatrième message de commande inclut une valeur d'indicateur finale qui indique que le quatrième paquet est envoyé en réponse au troisième paquet, et l'ensemble de valeurs, et
le second identifiant associé au second dispositif.

4. Procédé selon la revendication 2, dans lequel le premier identifiant est une première valeur prédéterminée, et dans lequel le second identifiant est une seconde valeur prédéterminée différente.

5. Procédé selon la revendication 1, comprenant en outre :
le démarrage d'un minuteur, par le premier dispositif, lorsque le premier paquet est envoyé ;
la détermination d'une absence de réception d'un deuxième paquet en provenance du second dispositif avant l'expiration du minuteur ; et
la détermination, après la détermination de l'absence du deuxième paquet, que le second dispositif est incapable de réaliser l'authentification.

6. Procédé de communication par paquets, comprenant :
la réception (702), par un second dispositif, d'un premier paquet en provenance d'un premier dispositif pour initier un processus de réalisation d'authentification basé sur des informations fournies dans le premier paquet, dans lequel le premier paquet inclut :
un premier message de commande incluant une première information de session de détection de retransmission bidirectionnelle, BFD, dans lequel le premier message de commande inclut une valeur d'indicateur d'interrogation qui indique que le premier dispositif attend de recevoir un paquet en provenance du second dispositif,
un premier identifiant associé au premier dispositif, et
une première charge utile qui inclut un type d'authentification devant être réalisé par le second dispositif, un mode d'authentification qui indique que le second dispositif doit réaliser une authentification périodique, et une longueur d'une donnée d'authentification devant être utilisée par le second dispositif pendant une authentification, dans lequel une fréquence de messages pour l'authentification périodique est indiquée par le mode d'authentification,
dans lequel le premier message de commande :
exclut une valeur dans un champ d'authentification présent dans le premier message de commande lorsqu'un processus d'authentification allégé est réalisé par le premier dispositif et le second dispositif, et
exclut d'une section d'authentification dans le premier message de commande une indication d'un autre type d'authentification, une autre longueur d'authentification d'une autre donnée d'identification, et l'autre donnée d'identification qui déclenche le second dispositif pour réaliser une authentification lorsque chaque paquet avec la section d'authentification est reçu par le second dispositif ;
la détermination (704), par le second dispositif, que le second dispositif est configuré pour réaliser le type d'authentification ; et
l'envoi (706), par le second dispositif et après la détermination, d'un deuxième paquet au premier dispositif, dans lequel le deuxième paquet inclut :
un deuxième message de commande incluant une deuxième information de session de BFD, dans lequel le deuxième message de commande inclut une valeur d'indicateur finale qui indique que le deuxième paquet est envoyé en réponse au premier paquet,
un second identifiant associé au second dispositif, et
une deuxième charge utile qui inclut le type d'authentification qui indique au premier dispositif que le second dispositif est configuré pour réaliser une authentification à l'aide du type d'authentification indiqué par la première charge utile, le mode d'authentification, et la longueur des données d'authentification.

7. Procédé selon la revendication 6, comprenant en outre :
la réception, par le second dispositif, d'un troisième paquet en provenance du premier dispositif, dans lequel le troisième paquet inclut :
un troisième message de commande incluant une troisième information de BFD, dans lequel le troisième message de commande inclut une valeur d'indicateur d'interrogation qui indique que le premier dispositif attend de recevoir un paquet en provenance du second dispositif,
un premier identifiant associé au premier dispositif, et
une troisième charge utile qui inclut un ensemble de valeurs qui inclut une seconde valeur qui indique que l'ensemble de valeurs est relatif au processus d'authentification allégé, à la longueur des données d'authentification, et aux données d'authentification ;
la réalisation, par le second dispositif, d'une authentification sur la base d'informations incluses dans la troisième charge utile ;
la détermination, par le second dispositif, que l'authentification est réussie ; et
l'envoi, par le second dispositif après la détermination que l'authentification est réussie, d'un quatrième paquet au premier dispositif, dans lequel le quatrième paquet inclut :
un quatrième message de commande incluant une quatrième information de session de BFD, dans lequel le quatrième message de commande inclut une valeur d'indicateur finale qui indique que le quatrième paquet est envoyé en réponse au troisième paquet, et l'ensemble de valeurs, et
le second identifiant associé au second dispositif.

8. Procédé selon la revendication 6, dans lequel le premier identifiant est une première valeur prédéterminée, et dans lequel le second identifiant est une seconde valeur prédéterminée différente.

9. Procédé selon la revendication 7, comprenant en outre :
l'envoi, par le second dispositif après la réception du premier paquet, d'un deuxième paquet au premier dispositif, dans lequel le deuxième paquet inclut :
un deuxième message de commande incluant une deuxième information de session de BFD, dans lequel le deuxième message de commande inclut une valeur d'indicateur finale qui indique que le deuxième paquet est envoyé en réponse au premier paquet,
un second identifiant associé au second dispositif, et
une deuxième charge utile qui inclut un ou plusieurs types d'authentification supplémentaires qui indique que le second dispositif est configuré pour réaliser une authentification à l'aide du ou des types d'authentification supplémentaires, du mode d'authentification, et de la longueur des données d'authentification ;
la réception, par le second dispositif, d'un troisième paquet en provenance du premier dispositif, dans lequel le troisième paquet inclut :
un troisième message de commande incluant une troisième information de session de BFD, dans lequel le troisième message de commande inclut une valeur d'indicateur d'interrogation qui indique que le premier dispositif attend de recevoir un paquet en provenance du second dispositif,
le premier identifiant associé au premier dispositif, et
une troisième charge utile qui inclut un ensemble de valeurs qui inclut une seconde valeur qui indique que l'ensemble de valeurs est relatif au processus d'authentification allégé, à la longueur des données d'authentification, et aux données d'identification,
dans lequel le second type d'authentification est sélectionné parmi le ou les types d'authentification supplémentaires ; et
la réalisation, par le second dispositif, d'une authentification basée sur des informations incluses dans la troisième charge utile ;
la détermination, par le second dispositif, que l'authentification est réussie ; et
l'envoi, par le second dispositif après la détermination que l'authentification est réussie, d'un quatrième paquet au premier dispositif, dans lequel le quatrième paquet inclut :
un quatrième message de commande incluant une quatrième information de session de BFD, dans lequel le quatrième message de commande inclut une valeur d'indicateur finale qui indique que le quatrième paquet est envoyé en réponse au troisième paquet, et l'ensemble de valeurs, et
le second identifiant associé au second dispositif.

10. Procédé selon la revendication 9, dans lequel le second type d'authentification présente le schéma ou protocole d'authentification le plus fort du ou des types d'authentification supplémentaires.

11. Appareil de communication par paquets comprenant un processeur, configuré pour mettre en œuvre un procédé selon une ou plusieurs des revendications 1 à 10.

12. Moyen de stockage de programme lisible par ordinateur sur lequel est stocké un code, le code, lorsqu'il est exécuté par un processeur, amenant le processeur à mettre en œuvre un procédé selon une ou plusieurs des revendications 1 à 10.
